# EUROPÄISCHE PATENTSCHRIFT

(11) **EP 4 264 648 B1**
(45) Veröffentlichungstag und Bekanntmachung des Hinweises auf die Patenterteilung: **19.11.2025**
(21) Anmeldenummer: 21839431.0
(22) Anmeldetag: 14.12.2021
(51) Int. Cl.: H01F 7/08, H01F 41/02, B23K 26/144, B23K 26/342

(54) **VERFAHREN ZU EINER HERSTELLUNG EINES MAGNETISCH GETRENNTEN KERNROHRS UND MAGNETAKTORVORRICHTUNG MIT DEM KERNROHR**
METHOD FOR PRODUCING A MAGNETICALLY SEPARATE CORE TUBE AND MAGNETIC-ARMATURE DEVICE WITH THE CORE TUBE
PROCÉDÉ POUR PRODUIRE UN TUBE CENTRAL SÉPARÉ MAGNÉTIQUEMENT ET DISPOSITIF ACTIONNEUR MAGNÉTIQUE ÉQUIPÉ DE CE TUBE CENTRAL

(30) Priorität: 16.12.2020 DE 102020133834
(43) Veröffentlichungstag der Anmeldung: 25.10.2023
(73) Patentinhaber: ETO MAGNETIC GmbH, 78333 Stockach (DE)
(72) Erfinder: BECHLER, Matthias, 78224 Singen-Friedingen (DE); GRUBER, Julia, 78333 Stockach (DE)
(74) Vertreter: Daub, Thomas
(86) Internationale Anmeldenummer: PCT/EP2021/085697
(87) Internationale Veröffentlichungsnummer: WO 2022/129053

(56) Entgegenhaltungen:
- DE-A1- 10 031 686
- DE-A1- 10 038 139
- JP-A- H09 312 208
- US-A1- 2010 024 200

## Beschreibung

### Stand der Technik

Die Erfindung betrifft ein Verfahren nach dem Oberbegriff des Anspruchs 1, eine Magnetaktorvorrichtung nach dem Oberbegriff des Anspruchs 11 und einen Magnetaktor nach dem Anspruch 16.

Es ist bereits vorgeschlagen worden, dass Kernrohre mit einer druckdichten magnetischen Trennung versehen werden. Bisher wird diese Trennung durch Schweißverfahren, wie z.B. einem Auftragsschweißen oder Kondensatorentladungsschweißen, oder durch Lötverfahren, wie z.B. einem MIG-Löten oder einem Hartlöten, erzeugt, wobei ein aus einem nichtmagnetischen Material bestehendes (ringförmiges) Trennelement in das Kernrohr eingefügt wird. Bei allen bisher verwendeten Verfahren wird das Kernrohr hohen Temperaturen ausgesetzt. Dadurch werden feine Konusgeometrien am Übergang zwischen einem magnetischen Hauptkörper des Kernrohrs und dem nichtmagnetischen eingefügten Trennelement, z.B. durch ein teilweises Aufschmelzen, beschädigt oder zerstört. Bisher wurde daher ein kostspieliger hoher technischer Aufwand bei der Durchführung, Steuerung und/oder Überwachung der verwendeten Schweiß- oder Lötverfahren betrieben, um die Beschädigungen der Konusgeometrie möglichst gering zu halten.

Außerdem erzeugen die beschriebenen Schweiß- oder Lötverfahren an einem Außenumfang des Trennelements unebene und/oder über eine Außenumfangsgeometrie des Kernrohrs überstehende Oberflächen, welche eine Funktionsfähigkeit / Montagefähigkeit des Kernrohrs beeinträchtigen können und daher aufwändig entfernt, geglättet und/oder an die Außenumfangsgeometrie des Kernrohrs angepasst werden müssen.

Die Aufgabe der Erfindung besteht insbesondere darin, ein gattungsgemäßes Verfahren mit vorteilhaften Eigenschaften hinsichtlich einer Herstellung von magnetisch getrennten Kernrohren, insbesondere unter Beibehaltung feiner Konusgeometrien und bei vorzugsweise zugleich gering gehaltenen Herstellungskosten, bereitzustellen. Die Aufgabe wird erfindungsgemäß durch die Merkmale der Patentansprüche 1, 11 und 16 gelöst, während vorteilhafte Ausgestaltungen und Weiterbildungen der Erfindung den Unteransprüchen entnommen werden können.

### Vorteile der Erfindung

Die Erfindung geht aus von einem Verfahren zu einer Herstellung eines Kernrohrs für einen Magnetaktor, welches zumindest entlang einer Längsrichtung des Kernrohrs eine, vorzugsweise druckdichte, magnetische Trennung aufweist.

Erfindungsgemäß wird in zumindest einem Verfahrensschritt ein, die magnetische Trennung des Kernrohrs erzeugendes Trennelement, welches aus einem nichtmagnetischen Material, insbesondere aus einem nichtmagnetischen Metall, ausgebildet ist, mittels eines Laser-Pulver-Auftragsschweißens stoffschlüssig in das Kernrohr eingefügt. Dadurch kann insbesondere eine vorteilhafte Herstellung des magnetisch getrennten Kernrohrs erreicht werden. Vorteilhaft kann dadurch eine Temperatur, welcher Teile des Kernrohrs während des Einfügens des Trennelements ausgesetzt sind, gering gehalten werden, vorzugsweise so gering, dass ein Aufschmelzen des Kernrohrs und damit insbesondere eine Beschädigung des Kernrohrs und/oder einer Magnetfeldleitkontur des Kernrohrs, insbesondere im Verbindungsbereich zwischen Kernrohr und Trennelement, verhindert werden kann. Zugleich kann jedoch die Temperatur vorteilhaft so hoch gewählt werden, dass eine gute und druckdichte Verbindung des Trennelements mit dem Kernrohr gewährleistet ist. Vorteilhaft kann eine besonders gute und/oder dauerhafte Verbindung des Kernrohrs mit dem Trennelement erreicht werden. Vorteilhaft erlaubt das Laser-Pulver-Auftragsschweißen eine exakte Regelung eines über einen Laser erzeugten Energieeintrags und damit eine exakte Temperatursteuerung des Verfahrens. Vorteilhaft kann dadurch im Gegensatz zu den Verfahren des Stands der Technik, bei denen in der Regel zu viel Material in die magnetische Trennung eingeschmolzen wird, um einen prozesssicheren Stoffschluss über einen gesamten von dem Trennelement bedeckten Bereich des Kernrohrs zu erreichen, eine präzise Anpassung der eingeschmolzenen Materialmenge an die jeweilige Kernrohrgeometrie erreicht werden. Vorteilhaft kann dadurch auf eine Nachbearbeitung im Anschluss an das Einfügen des Trennelements in das Kernrohr, beispielsweise auf ein zerspanendes Bearbeiten am Außenumfang des Trennelements, verzichtet werden. Vorteilhaft kann durch das Laser-Pulver-Auftragsschweißen eine glatte und/oder ebene Oberfläche an dem Außenumfang des Trennelements erreicht werden, insbesondere ohne nachträgliches zerspanendes Bearbeiten, wie beispielsweise einem Drehen oder Überdrehen des Außenumfangs des Trennelements. Vorteilhaft kann durch die Regelung des über einen Laser erzeugten Energieeintrags die Oberfläche des Trennelements am Außenumfang bereits während des Einbringens des Trennelements in das Kernrohr geglättet werden. Außerdem kann vorteilhaft eine besonders hohe Druckdichtigkeit des das Trennelement umfassenden Kernrohrs, insbesondere auch an den Verbindungsstellen zwischen Kernrohr und Trennelement, gewährleistet werden. Dadurch kann vorteilhaft eine besonders gute Eignung des Kernrohrs für Magnetaktoren in Hydraulikanwendungen erreicht werden. Vorteilhaft kann sichergestellt werden, dass das Trennelement in Kontaktbereichen zu dem Kernrohr durchgehend stoffschlüssig mit dem Kernrohr verbunden ist.

Unter einem "Kernrohr" soll insbesondere ein aus einem magnetflussleitenden (magnetflussbündelnden), insbesondere (weich-)magnetischen, vorzugsweise ferromagnetischen, Material ausgebildetes Bauteil eines Magnetaktors verstanden werden, welches zumindest zu einem Großteil einen Magnetkern des Magnetaktors ausbildet und/oder welches zumindest teilweise, vorzugsweise zumindest zu einem Großteil, in einem Spuleninneren einer Magnetspule des Magnetaktors angeordnet ist. Insbesondere ist das magnetische Material als ein Magnetwerkstoff ausgebildet. Insbesondere ist das Kernrohr zumindest zu einem Großteil aus einem magnetischen Stahl ausgebildet. Insbesondere bildet das Kernrohr zusammen mit zumindest einer Magnetspule des Magnetaktors eine Induktivität aus. Insbesondere ist das Kernrohr zumindest teilweise und/oder zumindest einseitig rohrförmig ausgebildet. Insbesondere ist das Kernrohr dazu vorgesehen, einen Magnetanker des Magnetaktors zumindest teilweise aufzunehmen. Insbesondere ist das Kernrohr dazu vorgesehen, einen Hubraum für den Magnetanker des Magnetaktors zumindest teilweise auszubilden. Insbesondere ist der Hubraum für den Magnetanker durch den rohrförmigen Teil des Kernrohrs gebildet. Insbesondere verläuft die Längsrichtung des Kernrohrs parallel zu einer Rohrachse, insbesondere einer Rotationssymmetrieachse, des rohrförmigen Teils des Kernrohrs. Insbesondere verläuft die Längsrichtung des Kernrohrs im in einem Magnetaktor montierten Zustand parallel zu einer Spulenachse der Magnetspule des Magnetaktors. Unter einem "Magnetaktor" soll in diesem Zusammenhang insbesondere eine Vorrichtung verstanden werden, die dazu vorgesehen ist, eine elektrische Leistung mittels eines Magnetfelds in eine mechanische Leistung umzuwandeln.

Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter einem Großteil soll insbesondere 51 %, vorzugsweise 66 %, bevorzugt 75 % und besonders bevorzugt 90 %, verstanden werden. Unter "stoffschlüssig verbunden" soll insbesondere verstanden werden, dass die Masseteile durch atomare oder molekulare Kräfte zusammengehalten werden. Unter der Wendung "druckdicht" soll insbesondere druckdicht bei üblichen Hydraulikdrücken, vorzugsweise druckdicht zumindest bei Drücken von mehr als 100 bar, vorteilhaft druckdicht bei Drücken von mehr als 200 bar, bevorzugt druckdicht bei Drücken von mehr als 300 bar und besonders bevorzugt druckdicht bei Drücken von mehr als 500 bar, verstanden werden. Vorzugsweise ist die Verbindung zwischen dem Trennelement und dem Hauptkörper des Kernrohrs derart ausgebildet, dass auch bei hohen Drücken im Inneren des Kernrohrs (beispielsweise bei Drücken wie oben aufgelistet) an der Verbindung keine Flüssigkeit und/oder kein Gas aus dem Kernrohr austreten kann.

Unter einer "magnetischen Trennung" des Kernrohrs soll insbesondere verstanden werden, dass zwei (aus einem magnetischen Material ausgebildete) Teilbereiche des Kernrohrs derart voneinander getrennt sind, dass zumindest ein Großteil aller in einem ersten Teilbereich des Kernrohrs verlaufenden Magnetfeldlinien daran gehindert sind, direkt in den zweiten Teilbereich des Kernrohrs überzutreten. Unter einer "magnetischen Trennung" des Kernrohrs soll insbesondere eine Unterbrechung der Magnetflussleitfähigkeit des Kernrohrs verstanden werden. Insbesondere ist das Trennelement dazu vorgesehen, die magnetische Trennung des Kernrohrs, insbesondere in der Längsrichtung des Kernrohrs, zu erzeugen. Insbesondere ist das Trennelement dazu vorgesehen, den Magnetfluss durch das Kernrohr entlang der Längsrichtung zu unterbrechen. Insbesondere ist das Trennelement dazu vorgesehen, die Magnetfeldlinien des Magnetfelds der Magnetspule derart umzuleiten, dass die Magnetfeldlinien im Bereich des Übergangs von dem Kernrohr zu dem Trennelement aus dem Kernrohr herausgeleitet werden. Insbesondere ist das Trennelement in einem Bereich des Kernrohrs angeordnet, welcher in dem montierten Zustand des Magnetaktors in dem Spuleninneren der Magnetspule angeordnet ist. Insbesondere ist das Trennelement in einem Bereich des Kernrohrs angeordnet, welcher in dem montierten Zustand des Magnetaktors den Hubraum für den Magnetanker ausbildet. Bei dem Laser-Pulver-Auftragsschweißen wird insbesondere ein pulverförmiger Zusatzwerkstoff, welcher vorzugsweise im fertiggestellten Zustand das Trennelement ausbilden soll, mit Laserenergie aufgeschmolzen und dadurch auf ein vorhandenes Bauteil, beispielsweise das Kernrohr, aufgeschweißt. Vorteilhaft entsteht dabei eine poren- und rissfreie Schicht und/oder ein poren- und rissfreies Element, wie das Trennelement, insbesondere mit einer geringen Aufmischung und mit einer geringen Wärmeeinflusszone. Insbesondere wird das Trennelement bei dem Laser-Pulver-Auftragsschweißen zwischen die zwei in der Längsrichtung voneinander getrennte magnetische Teilbereiche des Kernrohrs stoffschlüssig eingefügt. Insbesondere ist das aus den zwei Teilbereichen des Kernrohrs und dem Trennelement gebildete Bauteil des Magnetaktors als ein integrales und/oder einstückiges Bauteil ausgebildet. Insbesondere dient das Trennelement auch zur Stabilisierung und/oder Abdichtung der Kernrohrs.

Ferner wird erfindungsgemäß in zumindest einem, vorzugsweise vor dem Verfahrensschritt durchgeführten, Vorbereitungsschritt ein Kernrohrrohling, welcher insbesondere im fertiggestellten Zustand das Kernrohr ausbilden wird, auf einem Außenumfang mit einer umlaufenden Nut versehen, in welche das Trennelement in dem Verfahrensschritt eingefügt wird. Dadurch kann ein vorteilhaftes Herstellungsverfahren ermöglicht werden. Vorteilhaft kann dadurch eine einfache Einbringung des Trennelements in das Kernrohr ermöglicht werden. Vorteilhaft kann eine einfache und/oder exakte Positionierung und/oder Ausgestaltung des Trennelements ermöglicht werden. Insbesondere wird die umlaufende Nut in dem Vorbereitungsschritt in den Kernrohrrohling eingedreht. Alternativ ist jedoch auch denkbar, dass in dem Verfahrensschritt ein bereits die Nut enthaltender Kernrohrrohling gegossen wird. Der Kernrohrrohling ist insbesondere als ein massives, insbesondere zumindest im Wesentlichen zylindrisches, Vollteil, vorzugsweise Stahlteil, ausgebildet. Alternativ ist der Kernrohrrohling als ein zumindest teilweise ausgehöhltes und/oder zumindest teilweise rohrförmiges Teil, vorzugsweise Stahlteil, ausgebildet. In diesem Fall kann der Kernrohrrohling insbesondere als ein gezogenes Stahlrohr ausgebildet sein. Insbesondere ist der Außenumfang des Kernrohrrohlings durch eine Mantelfläche, insbesondere Zylindermantelfläche, des Kernrohrrohlings gebildet.

Zudem wird vorgeschlagen, dass in dem Vorbereitungsschritt zumindest eine seitliche Begrenzung der Nut mit einer Magnetfeldleitkontur versehen wird, welche insbesondere eine Konusgeometrie des fertiggestellten Kernrohrs zu einer Beeinflussung und/oder zu einem Design einer Kraft-Weg-Kennlinie des das Kernrohr aufweisenden Magnetaktors ausbilden wird. Dadurch kann ein vorteilhaftes Herstellungsverfahren ermöglicht werden. Vorteilhaft kann durch die Wahl der Gestalt der Magnetfeldleitkontur eine Kraft-Weg-Kennlinie des das fertiggestellte Kernrohr aufweisenden Magnetaktors festgelegt werden. Insbesondere begrenzt die seitliche Begrenzung die Nut zumindest im Wesentlichen in eine zu der Längsrichtung parallel verlaufende Richtung. Insbesondere ist zumindest die seitliche Begrenzung der Nut, welche die Nut in Richtung des Magnetkerns und/oder in eine von dem Magnetanker wegzeigende Richtung begrenzt, mit der Magnetfeldleitkontur versehen. Insbesondere ist die Magnetfeldleitkontur auf einer dem Magnetkern zugewandten Seite der Nut angeordnet. Insbesondere ist die Magnetfeldleitkontur als eine Abfolge von Kanten, Winkeln und/oder Radien ausgebildet. Insbesondere umfasst die Magnetfeldleitkontur zumindest zwei unterschiedliche Radien. Insbesondere umfasst die Magnetfeldleitkontur zumindest zwei Kanten. Es ist jedoch auch denkbar, dass die Magnetfeldleitkontur lediglich eine Kante und zwei Flächen oder lediglich einen Radius und zwei Flächen o. dgl. aufweist. Insbesondere ist die Magnetfeldleitkontur derart ausgebildet, dass ein besonders guter und/oder besonders verlustfreier Übergang des Magnetfelds aus dem Magnetkern in den Magnetanker erfolgen kann. Insbesondere wird die Form der Magnetfeldleitkontur in einem Berechnungs- und/oder Simulationsschritt bestimmt. Insbesondere kann die Magnetfeldleitkontur abhängig von der jeweils gewünschten Kraft-Weg-Kennlinie des Magnetaktors unterschiedliche Formen aufweisen. Insbesondere bleibt die Magnetfeldleitkontur, insbesondere die Konusgeometrie, in ihrer Form bei dem Laser-Pulver-Auftragsschweißen zumindest im Wesentlichen unverändert. Unter "im Wesentlichen unverändert", soll insbesondere verstanden werden, dass Abweichungen der Magnetfeldleitkonturen vor und nach der Durchführung des Laser-Pulver-Auftragsschweißens an jedem Punkt der Magnetfeldleitkontur kleiner sind als 0,2 mm, vorzugsweise kleiner sind als 0,1 mm und bevorzugt kleiner sind als 0,05 mm. Insbesondere ist die Magnetfeldleitkontur rotationssymmetrisch ausgebildet. Insbesondere wird die Magnetfeldleitkontur in das Kernrohr eingedreht. Insbesondere ist eine der seitlichen Begrenzungen mit der der Magnetfeldleitkontur gegenüberliegenden seitlichen Begrenzung der Nut frei von einer Magnetfeldleitkontur.

In einem aus den Dokumenten US 2010/024200 A1, DE 100 38 139 A1, JP H09 312208 A und DE 100 31 686 A1 bekannten Verfahren wird das nichtmagnetische Material in Pulverform in die Nut eingeblasen und dann, insbesondere zur Ausbildung des Trennelements, von einem Laserstrahl aufgeschmolzen.

Nach der Erfindung wird jedoch in dem Verfahrensschritt das nichtmagnetische Material in Pulverform in einen Laserstrahl eingeblasen, in dem Laserstrahl aufgeschmolzen und anschließend in bereits aufgeschmolzener Form in die Nut eingebracht. Dadurch kann vorteilhaft eine besonders hohe Herstellungsgeschwindigkeit erreicht werden, insbesondere indem höhere Abschmelzleistungen und/oder geringere Prozesszeiten erzielt werden können. Das nichtmagnetische Material in Pulverform wird somit bereits "im Flug" eingeschmolzen und trifft in flüssiger Form auf die Oberfläche des Kernrohrrohlings im Bereich der Nut auf. Vorteilhaft kann dadurch im Vergleich zum Stand der Technik wesentlich mehr Material aufgeschmolzen und in die Nut eingebracht werden, wodurch sich vorteilhaft eine Prozesszeit signifikant verkürzen lässt.

Des Weiteren wird vorgeschlagen, dass das in dem Verfahrensschritt in den Laserstrahl eingeblasene und in dem Laserstrahl aufgeschmolzene pulverförmige nichtmagnetische Material als ein nichtmagnetisches Metallpulver ausgebildet ist. Dadurch lassen sich vorteilhafte Eigenschaften hinsichtlich einer Druckdichtheit und/oder einer Stabilität erreichen, insbesondere da dann das Trennelement ebenfalls metallisch ist. Das nichtmagnetische Material des nichtmagnetischen Metallpulvers muss insbesondere ausreichend nichtmagnetisch sein, um als eine magnetische Trennung des Kernrohrs funktionieren zu können. Das nichtmagnetische Material des nichtmagnetischen Metallpulvers muss insbesondere in dem aufgeschmolzenen und wieder ausgehärteten Zustand eine ausreichende Festigkeit aufweisen, um eine stabile Ausbildung des Kernrohrs gewährleisten zu können. Beispielsweise ist das in dem Verfahrensschritt in den Laserstrahl eingeblasene und in dem Laserstrahl aufgeschmolzene pulverförmige nichtmagnetische Material als ein Metallpulver aus einem nichtmagnetischen Edelstahl, als ein Metallpulver aus einer Aluminiumbronze, als ein Metallpulver aus einer Aluminiumlegierung, als ein Metallpulver aus einer Bronze und/oder als ein Metallpulver aus einer CuSi-Legierung ausgebildet. Unter einem "Edelstahl" soll in diesem Zusammenhang ein legierter oder unlegierter Stahl mit einem hohen Reinheitsgrad, insbesondere mit einem Reinheitsgrad dessen Eisenbegleiter-Massenanteil kleiner ist als 0,025 %, verstanden werden. Vorzugsweise genügt der Edelstahl den Anforderungen eines rostfreien Stahls und/oder ist als ein rostfreier Stahl ausgebildet. Bevorzugt ist der Edelstahl als ein rostfreier Stahl mit einem zumindest überwiegend austenitischen Gefüge, bevorzugt mit einem nahezu ausschließlich austenitischen Gefüge, ausgebildet.

Zusätzlich wird vorgeschlagen, dass in zumindest einem weiteren Verfahrensschritt nach einem Einfügen des Trennelements in die Nut eine Ankeraufnahmeausnehmung in den Kernrohrrohling eingebracht wird, insbesondere eingebohrt oder eingedreht wird, welche sich vorzugsweise in der Längsrichtung, insbesondere des Kernrohrs, über die Nut hinaus erstreckt. Dadurch kann ein vorteilhaftes Herstellungsverfahren des magnetisch getrennten Kernrohrs erreicht werden. Vorteilhaft kann dadurch eine einfache Einbringung des Trennelements zwischen zwei vollständig oder nahezu vollständig voneinander getrennten Teilbereichen des Kernrohrs, insbesondere des Hauptkörpers des Kernrohrs, erreicht werden. Die Ankeraufnahmeausnehmung ist insbesondere zumindest im montierten Zustand des Magnetaktors dazu vorgesehen, den Magnetanker aufzunehmen. Die Ankeraufnahmeausnehmung bildet insbesondere den Hubraum für den Magnetanker aus. Insbesondere erstreckt sich die Ankeraufnahmeausnehmung zwischen dem Magnetkern und einem Ankeranschlagelement des Magnetaktors

Wenn der Kernrohrrohling in dem weiteren Verfahrensschritt bei dem Einbringen der Ankeraufnahmeausnehmung bis zu einem Nutgrund der Nut ausgehöhlt wird, kann vorteilhaft eine einfache vollständige Trennung der zwei in der Längsrichtung voneinander beabstandeten Teilbereiche des Kernrohrs, insbesondere des Hauptkörpers des Kernrohrs, erreicht werden. Vorteilhaft kann eine besonders gute magnetische Trennung der zwei in der Längsrichtung voneinander beabstandeten Teilbereiche des Kernrohrs erreicht werden. Vorteilhaft kann ein besonders effektiver Übergang des Magnetfelds von dem Magnetkern zu dem Magnetanker erreicht werden.

Wenn alternativ der Kernrohrrohling in dem weiteren Verfahrensschritt bei dem Einbringen der Ankeraufnahmeausnehmung soweit ausgehöhlt wird, dass zwischen einem Nutgrund der Nut und einer Innenoberfläche der Ankeraufnahmeausnehmung lediglich ein dünner aus dem Material des Kernrohrrohlings bestehender Steg, insbesondere mit einer Dicke von weniger als 0,5 mm und bevorzugt von weniger als 0,2 mm, übrigbleibt, kann vorteilhaft eine besonders gute Druckdichtigkeit bei gleichzeitig ausreichender magnetischer Trennung erreicht werden. Insbesondere wird in dem verbleibenden dünnen Steg sehr schnell eine Magnetfeldsättigung erreicht, so dass die durch den verbleibenden dünnen Steg verursachte Verschlechterung der magnetischen Eigenschaften des Gesamtsystems vernachlässigbar gering ist. Es ist denkbar, dass die Aushöhlung des Kernrohrrohlings bereits vor der Durchführung des Verfahrensschritts mit dem Laser-Pulver-Auftragsschweißen vorgenommen wird.

Ferner wird in einer weiteren Alternative der Erfindung vorgeschlagen, dass der Kernrohrohling, in den in dem Vorbereitungsschritt die Nut eingebracht wird, als ein gezogenes Rohr ausgebildet ist, welches bereits eine Ankeraufnahmeausnehmung aufweist. Dadurch ist die Ankeraufnahmeausnehmung zerspanungsfrei hergestellt. Dadurch kann vorteilhaft auf eine zerspanende Innenbearbeitung des Kernrohrs, insbesondere des Kernrohrrohlings, verzichtet werden. Außerdem weist ein gezogenes Rohr hinsichtlich einer Reibung mit dem Magnetanker besonders vorteilhafte Innenoberflächen auf, welche insbesondere reduziert sind im Vergleich mit einer durch eine Zerspanung erzeugten Innenoberfläche.

Außerdem wird vorgeschlagen, dass in dem Verfahrensschritt das Trennelement so exakt in eine Nut des Kernrohrs eingefügt wird, dass eine Oberfläche des Trennelements und eine Oberfläche des Kernrohrs eben ineinander übergehen. Dadurch kann vorteilhaft auf eine nachträgliche spanende Bearbeitung am Außenumfang verzichtet werden. Vorteilhaft kann dadurch eine Prozessgeschwindigkeit erhöht und Prozesskosten gesenkt werden. Insbesondere ist der Übergang zwischen der Oberfläche des Trennelements und der Oberfläche des Kernrohrs absatzfrei oder zumindest nahezu absatzfrei. Vorzugsweise ist ein Absatz am Übergang zwischen der Oberfläche des Trennelements und der Oberfläche des Kernrohrs kleiner als 0,5 mm, vorzugsweise kleiner als 0,2 mm. Insbesondere ist denkbar, dass das Trennelement in einem mittleren Bereich verjüngt ist. In diesem Fall geht die Oberfläche des Kernrohrs eben und/oder absatzfrei, vorzugsweise in beiden axialen Endbereichen, in die Oberfläche des Trennelements über, anschließend verjüngt sich das Trennelement zumindest in einem mittleren Bereich des Trennelements. Die im mittleren Bereich verjüngte Außengeometrie des Trennelements erfüllt dieselbe Aufgabe wie ein Trennelement mit einer komplett ebenen Oberfläche, lässt sich jedoch deutlich einfacher und kostengünstiger herstellen.

Zusätzlich wird vorgeschlagen, dass in zumindest einem Verfahrensschritt nach einem abgeschlossenen Einbringen und zumindest teilweisen Aushärten des Trennelements, insbesondere des in die Nut eingebrachten nichtmagnetischen Materials, der Laserstrahl oder ein weiterer Laserstrahl erneut über eine Oberfläche des Trennelements, insbesondere des über eine radial nach außen gewandte Oberfläche des in die Nut eingebrachten nichtmagnetischen Materials, gefahren wird, um dadurch die Oberfläche des Trennelements durch erneutes, zumindest teilweises Aufschmelzen des Trennelements, insbesondere in einem Oberflächenbereich des Trennelements, zu glätten und/oder zu egalisieren. Dadurch kann vorteilhaft auf eine nachträgliche spanende Bearbeitung am Außenumfang verzichtet werden. Vorteilhaft kann dadurch eine Prozessgeschwindigkeit erhöht und Prozesskosten gesenkt werden. Vorteilhaft kann ein ebener und/oder absatzfreier Übergang von Kernrohr zu Trennelement auf einfache Weise erzeugt und/oder sichergestellt werden.

Ferner wird eine Magnetaktorvorrichtung mit dem Kernrohr, welches entlang seiner Längsrichtung durch das Trennelement zumindest im Wesentlichen magnetisch getrennt ist, und wobei das Trennelement mittels des Laser-Pulver-Auftragsschweißens stoffschlüssig in das Kernrohr eingefügt ist, vorgeschlagen. Dadurch kann vorteilhaft eine Magnetaktorvorrichtung mit einem vorteilhaft magnetisch getrennten und zugleich druckdichten Kernrohr erzielt werden. Unter einer "Magnetaktorvorrichtung" soll in diesem Zusammenhang insbesondere zumindest ein Teil, insbesondere eine Unterbaugruppe, des Magnetaktors verstanden werden. Vorteilhaft ist die Magnetaktorvorrichtung zumindest zu einer Verwendung in einem Hydrauliksystem vorgesehen. Insbesondere kann die Magnetaktorvorrichtung dabei auch ein, vorteilhaft als Außengehäuse ausgebildetes, Aktorgehäuse, insbesondere zumindest zur Aufnahme des Kernrohrs, des Magnetankers und/oder der Magnetspule umfassen.

Weiterhin wird vorgeschlagen, dass das Kernrohr an einer Grenzfläche zu dem Trennelement die, insbesondere umlaufende, Magnetfeldleitkontur aufweist, welche insbesondere eine Konusgeometrie zu einer Beeinflussung einer Kraft-Weg-Kennlinie eines das Kernrohr aufweisenden Magnetaktors ausbildet. Dadurch kann insbesondere eine vorteilhafte Magnetfeldformung zur Einstellung eines gewünschten Verlaufs der Kraft-Weg-Kennlinie des Magnetaktors erreicht werden.

Zudem wird vorgeschlagen, dass das Trennelement in einem Bereich der Ankeraufnahmeausnehmung des Kernrohrs angeordnet ist. Dadurch kann insbesondere eine vorteilhafte Magnetfeldformung zur Einstellung eines gewünschten Verlaufs der Kraft-Weg-Kennlinie des Magnetaktors erreicht werden. Wenn das Trennelement sich von dem Außenumfang des Kernrohrs bis zu einem Innenumfang der Ankeraufnahmeausnehmung erstreckt, kann vorteilhaft eine besonders effektive magnetische Trennung des Kernrohrs, insbesondere der zwei Teilbereiche des Kernrohrs, erreicht werden.

Wenn alternativ das Trennelement sich von einem Außenumfang des Kernrohrs in Richtung der Ankeraufnahmeausnehmung erstreckt, wobei das Trennelement von der Ankeraufnahmeausnehmung durch einen dünnen, von dem Kernrohr gebildeten Steg, insbesondere mit einer Dicke von weniger als 0,5 mm, vorzugsweise weniger als 0,2 mm, getrennt ist, kann vorteilhaft eine besonders hohe Druckdichtigkeit bei gleichzeitiger ausreichend guter magnetischer Trennung der zwei Teilbereiche des Kernrohrs erreicht werden.

Ferner wird der Magnetaktor, insbesondere ein Magnetaktor für Hydraulikanwendungen, mit der Magnetaktorvorrichtung vorgeschlagen.

Das erfindungsgemäße Verfahren, die erfindungsgemäße Magnetaktorvorrichtung und der erfindungsgemäße Magnetaktor soll hierbei nicht auf die oben beschriebene Anwendung und Ausführungsform beschränkt sein. Insbesondere kann das erfindungsgemäße Verfahren, die erfindungsgemäße Magnetaktorvorrichtung und der erfindungsgemäße Magnetaktor zu einer Erfüllung einer hierin beschriebenen Funktionsweise eine von einer hierin genannten Anzahl von einzelnen Verfahrensschritten, Elementen, Bauteilen und Einheiten abweichende Anzahl aufweisen.

### Zeichnungen

Weitere Vorteile ergeben sich aus der folgenden Zeichnungsbeschreibung. In den Zeichnungen sind zwei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Schnittansicht eines Magnetaktors mit einer Magnetaktorvorrichtung,
- Fig. 2: eine schematische Detailschnittansicht der Magnetaktorvorrichtung mit einem Kernrohr und mit einem Trennelement,
- Fig. 3: eine schematische Schnittansicht des Kernrohrs in einem teilweise hergestellten Zustand, d.h. als teilweise bearbeiteter Kernrohrrohling,
- Fig. 4: ein schematisches Ablaufdiagramm eines Verfahrens zur Herstellung des durch das Trennelement magnetisch getrennten Kernrohrs,
- Fig. 5: eine schematische Schnittansicht einer zweiten Variante des Kernrohrs in einem teilweise hergestellten Zustand, d.h. als teilweise bearbeiteter alternativer Kernrohrrohling,
- Fig. 6: eine schematische Detailschnittansicht einer alternativen Magnetaktorvorrichtung mit einem alternativen Kernrohr und mit einem alternativen Trennelement und
- Fig. 7: einen Ausschnitt einer schematischen Schnittansicht der Magnetaktorvorrichtung mit dem Kernrohr und mit einem alternativen Trennelement.

### Beschreibung der Ausführungsbeispiele

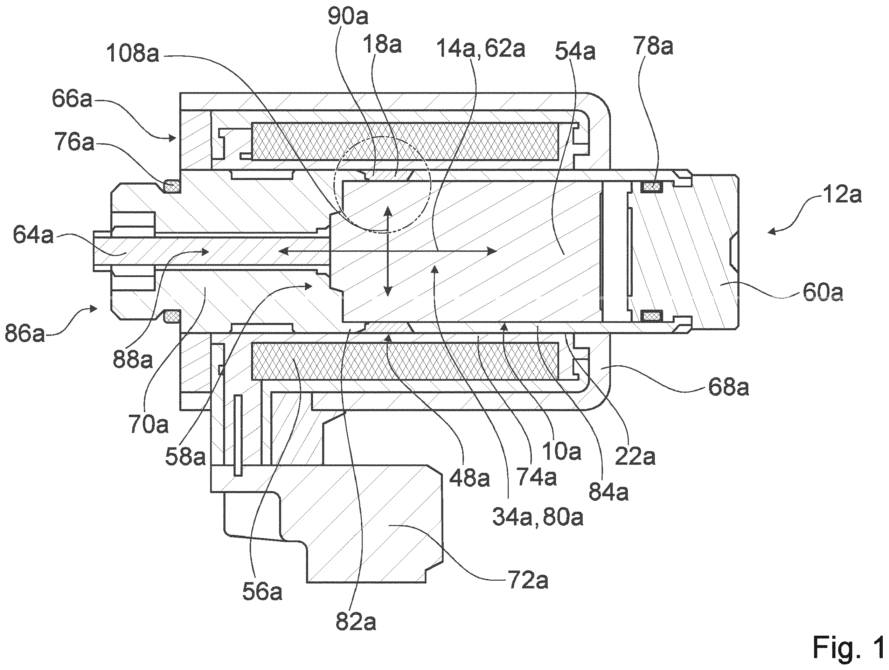

Fig. 1 zeigt eine schematische Schnittansicht eines Magnetaktors 12a. Der Magnetaktor 12a ist für Hydraulikanwendungen vorgesehen. Der Magnetaktor 12a umfasst einen Magnetanker 54a. Der Magnetanker 54a ist von einer Flüssigkeit, insbesondere einer Hydraulikflüssigkeit (nicht dargestellt) umspült. Der Magnetanker 54a ist zumindest zu einem Großteil aus einem magnetischen, insbesondere ferromagnetischen, Werkstoff, beispielsweise einem magnetischen Stahl, ausgebildet. Der Magnetaktor 12a umfasst eine Magnetspule 56a. Die Magnetspule 56a umfasst einen Wickelkörper 74a. Die Magnetspule 56a umfasst eine Mehrzahl an Spulenwicklungen (nicht dargestellt). Die Spulenwicklungen sind auf den Wickelkörper 74a aufgewickelt. Die Spulenwicklungen der Magnetspule 56a sind um eine Spulenachse 62a der Magnetspule 56a gewickelt. Die Magnetspule 56a ist dazu vorgesehen, ein Magnetfeld zu erzeugen, welches wiederum dazu vorgesehen ist, eine Bewegung des Magnetankers 54a zu erzeugen. Der Magnetanker 54a ist dazu vorgesehen, sich in Richtungen parallel zu der Spulenachse 62a zu bewegen. Der Magnetanker 54a ist aus einem das Magnetfeld der Magnetspule 56a leitenden und das Magnetfeld der Magnetspule 56a bündelnden Werkstoff ausgebildet. Die Magnetspule 56a weist ein Spuleninneres 58a auf. Ein Großteil einer Bewegungsstrecke des Magnetankers 54a verläuft innerhalb des Spuleninneren 58a. Der Magnetaktor 12a umfasst ein Stößelelement 64a. Das Stößelelement 64a ist dazu vorgesehen, eine Bewegung des Magnetankers 54a nach außen (aus dem Magnetaktor 12a heraus) zu übertragen. Das Stößelelement 64a ist mit dem Magnetanker 54a wirkverbunden. Das Stößelelement 64a folgt einer Bewegung des Magnetankers 54a. Das Stößelelement 64a ist parallel zu der Spulenachse 62a bewegbar. Der Magnetaktor 12a umfasst ein Magnetjoch 66a. Das Magnetjoch 66a umgibt die Magnetspule 56a auf einer Außenseite der Magnetspule 56a zumindest teilweise. Der Magnetaktor 12a umfasst ein Aktorgehäuse 68a. Das Aktorgehäuse 68a begrenzt den Magnetaktor 12a nach außen hin. Der Magnetaktor 12a umfasst ein Steckerelement 72a. Das Steckerelement 72a ist zu einem Stromanschluss des Magnetaktors 12a, insbesondere der Magnetspule 56a, vorgesehen. Das Steckerelement 72a ist lediglich beispielhaft dargestellt und kann verschiedene abweichende Bauformen, je nach Anwendung oder Einsatzbereich aufweisen.

Der Magnetaktor 12a weist eine Magnetaktorvorrichtung 48a auf. Die Magnetaktorvorrichtung 48a weist ein Kernrohr 10a auf. Das Kernrohr 10a ist zumindest zu einem Großteil aus einem magnetischen, insbesondere ferromagnetischen, Werkstoff, beispielsweise einem magnetischen Stahl, ausgebildet. Das Kernrohr 10a ist aus einem das Magnetfeld der Magnetspule 56a leitenden und das Magnetfeld der Magnetspule 56a bündelnden Werkstoff ausgebildet. Das Kernrohr 10a kann zumindest zu einem Großteil aus einem identischen Material ausgebildet sein wie der Magnetanker 54a. Alternativ können das Kernrohr 10a und der Magnetanker 54a auch aus unterschiedlichen Materialien ausgebildet sein. Das Kernrohr 10a erstreckt sich entlang der Spulenachse 62a der Magnetspule 56a. Das Kernrohr 10a ist zumindest zu einem Großteil in dem Spuleninneren 58a der Magnetspule 56a angeordnet. Das Kernrohr 10a ist unbeweglich relativ zu der Magnetspule 56a angeordnet. Das Kernrohr 10a weist eine Längsrichtung 14a auf. Die Längsrichtung 14a des Kernrohrs 10a verläuft zumindest im Wesentlichen parallel zu der Spulenachse 62a der Magnetspule 56a. Das Kernrohr 10a ist druckdicht nach außen hin abgedichtet. Zur druckdichten Abdichtung des Kernrohrs 10a umfasst die Magnetaktorvorrichtung 48a zwei O-Ringe 76a, 78a, welche das Kernrohr 10a jeweils an gegenüberliegenden Enden druckdicht abdichten. Einer der O-Ringe 76a dichtet den Magnetaktor 12a auf einer Anschlussseite 86a des Magnetaktors 12a, beispielsweise gegenüber einem Hydrauliksystem, an das der Magnetaktor 12a angeschlossen ist, ab.

Die Magnetaktorvorrichtung 48a umfasst ein Ankeranschlagelement 60a. Das Ankeranschlagelement 60a ist dazu vorgesehen, eine Bewegung des Magnetankers 54a in zumindest eine Richtung parallel zu der Längsrichtung 14a des Kernrohrs 10a zu begrenzen. Das Kernrohr 10a bildet eine Ankeraufnahmeausnehmung 34a aus. Der Magnetanker 54a ist in der Ankeraufnahmeausnehmung 34a aufgenommen. Das Kernrohr 10a bildet einen Hubraum 80a aus. Der Hubraum 80a gibt einen Bewegungsraum für den Magnetanker 54a vor. Das Ankeranschlagelement 60a begrenzt den Hubraum 80a zu einer Seite. Das Ankeranschlagelement 60a ist insbesondere aus einem Metall ausgebildet. Das Ankeranschlagelement 60a ist mit einem Endbereich des Kernrohrs 10a verbunden, vorzugsweise verpresst und/oder formschlüssig verbunden. Die Verbindung zwischen einem Inneren des Kernrohrs 10a und dem Ankeranschlagelement 60a ist mittels des O-Rings 78a druckdicht abgedichtet.

Die Magnetaktorvorrichtung 48a weist einen Magnetkern 70a auf. Das Kernrohr 10a geht an einem Ende in einen Magentkern 70a über. Das Kernrohr 10a geht auf einer zu dem Ankeranschlagelement 60a gegenüberliegenden Seite in den Magnetkern 70a über.

Der Magnetanker 54a ist in dem Kernrohr 10a vollständig aufgenommen. Das Stößelelement 64a ist teilweise in dem Kernrohr 10a aufgenommen. Das Stößelelement 64a ist teilweise in dem Magnetkern 70a aufgenommen. Das Stößelelement 64a tritt an der Anschlussseite 86a aus dem Magnetkern 70a heraus. Das Kernrohr 10a ist überwiegend rohrförmig ausgebildet.. Der Magnetkern 70a weist eine Stößelaufnahmeausnehmung 88a auf, welche dazu vorgesehen ist, in einem montierten Zustand des Magnetaktors 12 das Stößelelement 64a aufzunehmen. Das an den Magnetanker 70a anschließende Kernrohr 10a bildet zumindest zu einem Großteil den Hubraum 80a für den Magnetanker 54a aus.

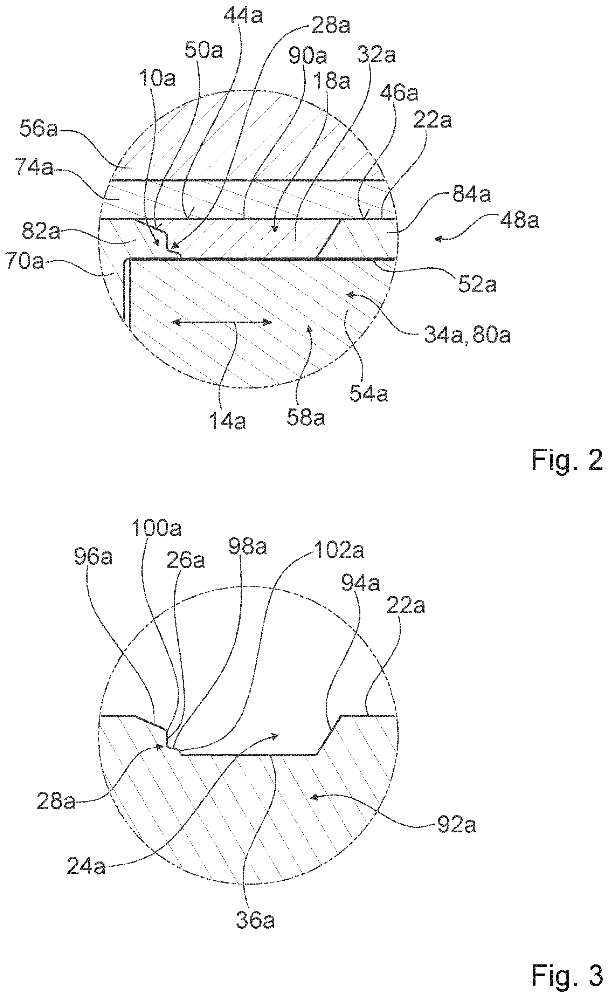

Die Fig. 2 zeigt schematisch einen in der Fig. 1 durch einen Kreis markierten Ausschnitt des Magnetaktors 12a. Das Kernrohr 10a ist entlang der Längsrichtung 14a vollständig magnetisch getrennt. Die Magnetaktorvorrichtung 48a weist ein Trennelement 18a auf. Das Trennelement 18a trennt das Kernrohr 10a vollständig in zwei nicht miteinander verbundene, insbesondere nicht physisch und nicht magnetisch miteinander verbundene, Teile, insbesondere in zwei Teilbereiche 82a, 84a des Kernrohrs 10a. Das Trennelement 18a ist zwischen die beiden Teile, insbesondere Teilbereiche 82a, 84a, des Kernrohrs 10a eingefügt. Das Trennelement 18a ist stoffschlüssig mit den beiden Teilen, insbesondere Teilbereichen 82a, 84a, des Kernrohrs 10a verbunden. Das Trennelement 18a ist auf gegenüberliegenden Seiten des Trennelements 18a stoffschlüssig mit den beiden Teilen, insbesondere Teilbereichen 82a, 84a, des Kernrohrs 10a verbunden. Das Trennelement 18a ist druckdicht mit den beiden Teilen, insbesondere Teilbereichen 82a, 84a, des Kernrohrs 10a verbunden. Das Trennelement 18a bildet eine druckdichte magnetische Trennung des Kernrohrs 10a in die zwei Teile, insbesondere Teilbereiche 82a, 84a, aus. Das Trennelement 18a erstreckt sich von einem Außenumfang 22a des Kernrohrs 10a bis zu einem Innenumfang 52a der Ankeraufnahmeausnehmung 34a.

Das Trennelement 18a ist rohrförmig, insbesondere als ein Rohrabschnitt, ausgebildet. Das Trennelement 18a ist mittels eines Laser-Pulver-Auftragsschweißens stoffschlüssig in das Kernrohr 10a eingefügt. Das Trennelement 18a ist aus einem nichtmagnetischen Material 32a ausgebildet. Das Trennelement 18a ist aus einem nicht-ferromagnetischen Werkstoff ausgebildet. Das Trennelement 18a leitet das Magnetfeld der Magnetspule 56a schlecht oder nicht.

Das Kernrohr 10a weist eine Grenzfläche 50a zu dem Trennelement 18a auf. Das Trennelement 18a ist mit der Grenzfläche 50a des Kernrohrs 10a stoffschlüssig verbunden. Das Kernrohr 10a weist an der Grenzfläche 50a eine Magnetfeldleitkontur 28a auf. Die Magnetfeldleitkontur 28a ist um das Kernrohr 10a umlaufend. Die Magnetfeldleitkontur 28a bildet eine Konusgeometrie zu einer Beeinflussung einer Kraft-Weg-Kennlinie des das Kernrohr 10a aufweisenden Magnetaktors 12a aus. Die Magnetfeldleitkontur 28a bildet eine Konusgeometrie zu einer Beeinflussung der Kraft-Weg-Kennlinie des Magnetankers 54a aus. Der erste Teilbereich 82a des Kernrohrs 10a, insbesondere der in den Magnetkern 70a übergehende Teilbereich 82a des Kernrohrs 10a, bildet die Magnetfeldleitkontur 28a aus. Die Magnetfeldleitkontur 28a ist auf einer von der Anschlussseite 86a abgewandten Seite eines Teils des Kernrohrs 10a, insbesondere des ersten Teilbereichs 82a des Kernrohrs 10a, vorzugsweise des Magnetkerns 70a, angeordnet. Der zweite Teilbereich 84a des Kernrohrs 10a, insbesondere der die Ankeraufnahmeausnehmung 34a des Kernrohrs 10a ausbildende Teil des Kernrohrs 10a, ist im in den Figuren dargestellten Beispiel frei von einer Magnetfeldleitkontur. Das Trennelement 18a ist in einem Bereich der Ankeraufnahmeausnehmung 34a des Kernrohrs 10a angeordnet. Das Trennelement 18a ist in einem Bereich des Magnetaktors 12a angeordnet, in welchem das Kernrohr 10a die Ankeraufnahmeausnehmung 34a umgibt.

Das Kernrohr 10a kann als ein gebohrtes oder gedrehtes Rohr, d.h. insbesondere als ein Rohr, dessen Ankeraufnahmeausnehmung 34a und/oder dessen Stößelaufnahmeausnehmung 88a durch eine zerspanende Bearbeitung eines (Vollkörper-) Kernrohrrohlings 92a erzeugt sind, oder als ein gezogenes Rohr ausgebildet sein, d.h. insbesondere als ein Rohr, dessen Ankeraufnahmeausnehmung 34a und/oder dessen Stößelaufnahmeausnehmung 88a ohne eine zerspanende Bearbeitung eines (Vollkörper-) Kernrohrrohlings 92a erzeugt sind.

Das Kernrohr 10a weist auf dem Außenumfang 22a eine Oberfläche 46a auf. Das Trennelement 18a weist auf einem Außenumfang 90a des Trennelements 18a eine Oberfläche 44a auf. Das Trennelement 18a ist so exakt in das Kernrohr 10a eingefügt, dass die Oberfläche 44a des Trennelements 18a und die Oberfläche 46a des Kernrohrs 10a eben ineinander übergehen. Ein Übergang der Oberflächen 44a, 46a von Kernrohr 10a und Trennelement 18a ist im Wesentlichen absatzfrei.

Die Fig. 3 zeigt eine schematische Schnittansicht eines mit dem Ausschnitt aus der Fig. 2 übereinstimmenden Teilbereichs einer ersten Variante eines bereits teilweise (durch Einbringen einer Nut 24a) bearbeiteten Kernrohrrohlings 92a. Der Kernrohrrohling 92a ist aus einem zylindrischen Vollmaterial ausgebildet. Der Kernrohrrohling 92a weist die Nut 24a auf. Die Nut 24a läuft um den Kernrohrrohling 92a um. Die Nut 24a ist in den Kernrohrrohling 92a eingedreht. Die Nut 24a weist seitliche Begrenzungen 26a, 94a auf. Eine der seitlichen Begrenzungen 26a bildet die Magnetfeldleitkontur 28a aus. Die Magnetfeldleitkontur 28a umfasst beispielhaft zwei (unterschiedliche) Stufen 96a, 98a. Die Magnetfeldleitkontur 28a umfasst beispielhaft zwei (unterschiedliche) Radien 100a, 102a. Von der dargestellten Magnetfeldleitkontur 28a wesentlich verschieden ausgestaltete weitere Magnetfeldleitkonturen sind selbstverständlich denkbar. Die Nut 24a weist einen Nutgrund 36a auf.

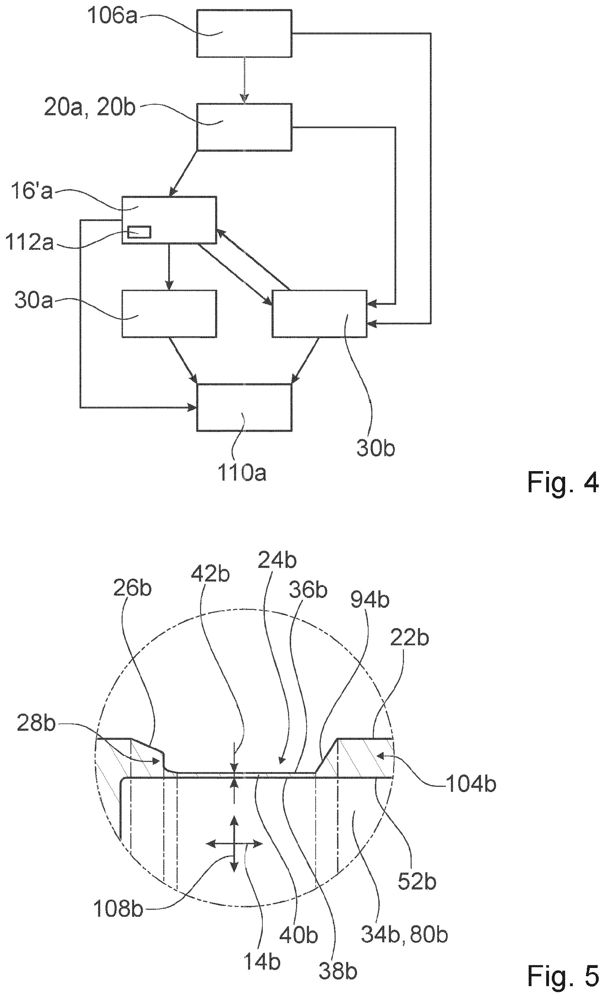

Die Fig. 4 zeigt ein schematisches Ablaufdiagramm eines Verfahrens zur Herstellung des durch das Trennelement 18a magnetisch getrennten Kernrohrs 10a für den Magnetaktor 12a. In zumindest einem Verfahrensschritt 106a wird der Kernrohrrohling 92a bereitgestellt. In einem Vorbereitungsschritt 20a wird der Kernrohrrohling 92a auf dem Außenumfang 22a mit der umlaufenden Nut 24a versehen. In dem Vorbereitungsschritt 20a wird die seitliche Begrenzung 26a der Nut 24a mit der Magnetfeldleitkontur 28a versehen. Die Magnetfeldleitkontur 28a wird die Konusgeometrie des fertiggestellten Kernrohrs 10a, welche zur gezielten Beeinflussung der Kraft-Weg-Kennlinie des das Kernrohr 10a aufweisenden Magnetaktors 12a vorgesehen ist, ausbilden. Die Magnetfeldleitkontur 28a wird in dem Vorbereitungsschritt 20a in den Kernrohrrohling 92a eingedreht.

In einem Verfahrensschritt 16'a wird das, die magnetische Trennung des Kernrohrs 10a erzeugende Trennelement 18a, welches aus dem nichtmagnetischen Material 32a ausgebildet ist, mittels eines Laser-Pulver-Auftragsschweißens stoffschlüssig in das Kernrohr 10a eingefügt. In dem Verfahrensschritt 16'a wird das Trennelement 18a mittels des Laser-Pulver-Auftragsschweißverfahrens in die in dem Vorbereitungsschritt 20a erzeugte umlaufende Nut 24a eingefügt.

In dem Verfahrensschritt 16'a wird das nichtmagnetische Material 32a in Pulverform in den Laserstrahl eingeblasen, woraufhin das in den Laserstrahl eingeblasene nichtmagnetische Material 32a von dem Laserstrahl aufgeschmolzen wird. Anschließend wird in dem Verfahrensschritt 16'a das nichtmagnetische Material 32a in bereits aufgeschmolzener Form in die Nut 24a des Kernrohrrohlings 92a eingebracht.

Das in dem Verfahrensschritt 16'a in den Laserstrahl eingeblasene und in dem Laserstrahl aufgeschmolzene pulverförmige nichtmagnetische Material 32a ist als ein nichtmagnetisches Metallpulver ausgebildet. Das in dem Verfahrensschritt 16'a eingefügte Trennelement 18a wird durch das Laser-Pulver-Auftragsschweißverfahren so exakt in die Nut 24a des Kernrohrs 10a eingefügt, dass die Oberfläche 44a des Trennelements 18a und die Oberfläche 46a des Kernrohrs 10a eben ineinander übergehen. In zumindest einem Verfahrensschritt 112a wird nach einem abgeschlossenen Einbringen und zumindest teilweisen Aushärten des Trennelements 18a der Laserstrahl oder ein weiterer Laserstrahl erneut über die Oberfläche 44a des Trennelements 18a gefahren. Dadurch wird die Oberfläche 44a des Trennelements 18a durch erneutes, zumindest teilweises Aufschmelzen des Trennelements 18a geglättet und/oder egalisiert. Das gesamte Herstellungsverfahren kann dadurch vorteilhaft frei von jeglichen spanenden Bearbeitungsschritten an dem Außenumfang 22a des Kernrohrs 10a und an dem Außenumfang 90a des Trennelements 18a werden.

In zumindest einem weiteren Verfahrensschritt 30a wird nach dem Einfügen des Trennelements 18a in die Nut 24a des Kernrohrrohlings 92a die sich in der Längsrichtung 14a über die Nut 24a hinaus erstreckende Ankeraufnahmeausnehmung 34a in den Kernrohrrohling 92a eingebracht. In dem weiteren Verfahrensschritt 30a wird die Ankeraufnahmeausnehmung 34a in den Kernrohrrohling 92a eingebohrt oder eingedreht. In dem weiteren Verfahrensschritt 30a wird der Kernrohrrohling 92a bei dem Einbringen der Ankeraufnahmeausnehmung 34a bis zu dem Nutgrund 36a der Nut 24a ausgehöhlt, wodurch die beiden Teilbereiche 82a, 84a des Kernrohrs 10a vollständig (physisch und magnetisch) voneinander getrennt werden. In diesem Fall ist nach der Durchführung des weiteren Verfahrensschritts 30a kein (magnetisches) Kernrohrmaterial mehr in Radialrichtung 108a des Kernrohrs 10a oberhalb oder unterhalb des Trennelements 18a vorhanden.

In einem zu dem weiteren Verfahrensschritt 30a alternativ durchgeführten weiteren Verfahrensschritt 30b wird ein Kernrohrrohling 92b bei einem Einbringen einer Ankeraufnahmeausnehmung 34b nur soweit ausgehöhlt, dass zwischen einem Nutgrund 36b einer Nut 24b des Kernrohrrohlings 92b und einer Innenoberfläche 38b der eingebrachten Ankeraufnahmeausnehmung 34b ein dünner aus dem (magnetischen) Material des Kernrohrrohlings 92b bestehender Steg 40b übrigbleibt. Der dabei übrigbleibende Steg 40b weist eine Dicke 42b von weniger als 0,5 mm und vorzugsweise von weniger als 0,2 mm auf. Die Durchführung des alternativen weiteren Verfahrensschritts 30b, bei welcher der dünne Steg 40b erhalten bleibt, kann vor dem Verfahrensschritt 16a, 16'a, in dem das Laser-Pulver-Auftragsschweißen des Trennelements 18a erfolgt, oder nach dem Verfahrensschritt 16a, 16'a, in dem das Laser-Pulver-Auftragsschweißen des Trennelements 18a erfolgt, durchgeführt werden.

Außerdem kann zusätzlich alternativ im Fall einer Beibehaltung des dünnen Stegs 40b unterhalb des Trennelements 18b der alternative weitere Verfahrensschritt 30b, d.h. das Aushöhlen des Kernrohrrohlings 92b, vollständig ausgelassen werden, wenn ein alternativ ausgebildeter Kernrohrrohling 104b in Form eines gezogenen Rohrs verwendet wird. Dabei wird in dem Vorbereitungsschritt 20b die Nut 24b derart in den bereits als ein gezogenes Rohr ausgebildeten Kernrohrrohling 104b, welcher dadurch bereits eine Ankeraufnahmeausnehmung 34b aufweist, eingebracht, dass der dünne Steg 40b nach der Durchführung des Vorbereitungsschritt 20b bestehen bleibt.

In zumindest einem weiteren Verfahrensschritt 110a wird das fertiggestellte und magnetisch zumindest im Wesentlichen getrennte Kernrohr 10a in einen Magnetaktor 12a montiert.

In den Figuren 4 (teilweise), 5 und 6 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 4 oder 7, verwiesen werden kann. Zur Unterscheidung der Ausführungsbeispiele ist der Buchstabe a den Bezugszeichen des Ausführungsbeispiels in den Figuren 1, 2, 3, 4 (teilweise) und 7 nachgestellt. In dem Ausführungsbeispiel der Figuren 4 (teilweise), 5 und 6 ist der Buchstabe a durch den Buchstaben b ersetzt.

Die Fig. 5 zeigt eine schematische Schnittansicht eines mit dem Ausschnitt aus der Fig. 2 übereinstimmenden Teilbereichs einer zweiten Variante eines bereits teilweise (durch Einbringen einer Nut 24b) bearbeiteten Kernrohrrohlings 104b. Der Kernrohrrohling 104b ist aus einem zylindrischen Rohr ausgebildet. Der Kernrohrrohling 104b ist aus einem gezogenen zylindrischen Rohr ausgebildet. Der Kernrohrrohling 104b ist aus einem nahtlosen gezogenen zylindrischen Rohr ausgebildet. Der Kernrohrrohling 104b umfasst einen Innenumfang 52b und einen Außenumfang 22b. Der Kernrohrrohling 104b weist die Nut 24b auf. Die Nut 24b erstreckt sich von dem Außenumfang 22b in Richtung des Innenumfangs 52b. Die Nut 24b durchdringt die Rohrwand des Kernrohrrohlings 104b jedoch nicht. Die Nut 24b läuft um den Kernrohrrohling 104b um. Die Nut 24b ist in den Kernrohrrohling 104b eingedreht. Die Nut 24b weist seitliche Begrenzungen 26b, 94b auf. Eine der seitlichen Begrenzungen 26b bildet eine Magnetfeldleitkontur 28b aus. Die Nut 24b weist einen Nutgrund 36b auf. Zwischen dem Nutgrund 36b und dem Innenumfang 52b des Kernrohrrohlings 104b befindet sich ein dünner aus dem Material des Kernrohrrohlings 104b bestehender Steg 40b. Der Steg 40b weist eine Dicke 42b von weniger als 0,5 mm auf.

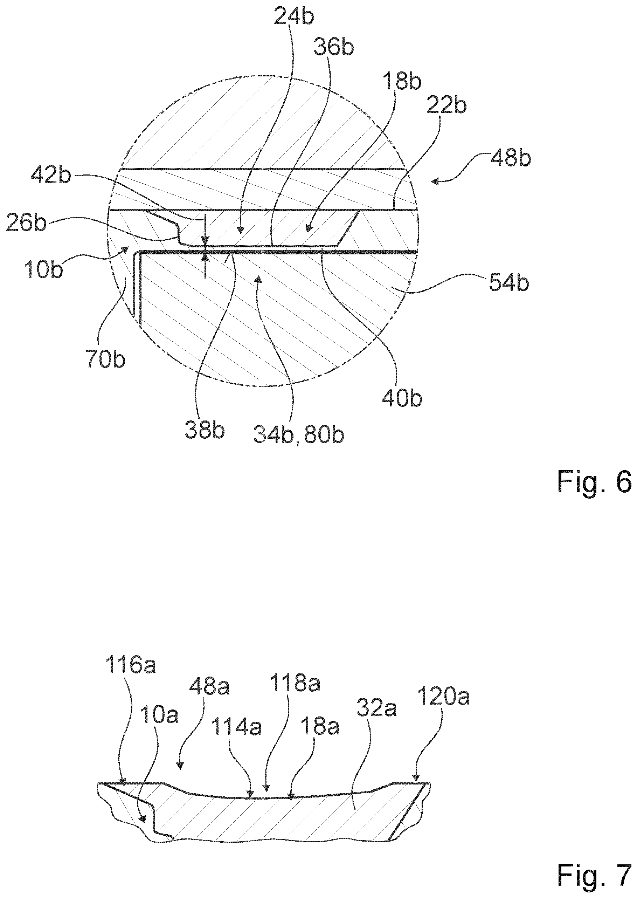

Die Fig. 6 zeigt einen mit dem Ausschnitt aus der Fig. 2 übereinstimmenden Ausschnitt eines alternativen Magnetaktors 12b mit einer alternativen Magnetaktorvorrichtung 48b. Die alternative Magnetaktorvorrichtung 48b weist ein alternatives Trennelement 18b und ein alternatives Kernrohr 10b auf. Das Trennelement 18b erstreckt sich von einem Außenumfang 22b des Kernrohrs 10b in Richtung einer durch das Kernrohr 10b gebildeten Ankeraufnahmeausnehmung 34b. Das Trennelement 18b ist von der Ankeraufnahmeausnehmung 34b durch den dünnen, von dem Kernrohr 10b gebildeten Steg 40b, welcher eine Dicke 42b von weniger als 0,5 mm aufweist, getrennt. Im bestromten Zustand des Magnetaktors 12b erreicht der dünne Steg 40b sehr schnell eine vollständige Magnetfeldsättigung, so dass die Kraft-Weg-Kennlinie des Magnetaktors 12b durch den dünnen Steg 40b nicht oder nur unwesentlich beeinflusst oder beeinträchtigt ist.

Die Fig. 7 zeigt schematisch einen Ausschnitt der Magnetaktorvorrichtung 48a mit dem Kernrohr 10a und dem Trennelement 18a. Das Trennelement 18a geht in Randbereichen 116a, 120a eben in das Kernrohr 10a über. Das Trennelement 18a weist in einem mittleren Bereich 118a eine Verjüngung 114a auf.

### Bezugszeichen

- 10: Kernrohr
- 12: Magnetaktor
- 14: Längsrichtung
- 16: Verfahrensschritt
- 18: Trennelement
- 20: Vorbereitungsschritt
- 22: Außenumfang
- 24: Nut
- 26: Seitliche Begrenzung
- 28: Magnetfeldleitkontur
- 30: Weiterer Verfahrensschritt
- 32: Nichtmagnetisches Material
- 34: Ankeraufnahmeausnehmung
- 36: Nutgrund
- 38: Innenoberfläche
- 40: Steg
- 42: Dicke
- 44: Oberfläche
- 46: Oberfläche
- 48: Magnetaktorvorrichtung
- 50: Grenzfläche
- 52: Innenumfang
- 54: Magnetanker
- 56: Magnetspule
- 58: Spuleninneres
- 60: Ankeranschlagelement
- 62: Spulenachse
- 64: Stößelelement
- 66: Magnetjoch
- 68: Aktorgehäuse
- 70: Magnetkern
- 72: Steckerelement
- 74: Wickelkörper
- 76: O-Ring
- 78: O-Ring
- 80: Hubraum
- 82: Teilbereich
- 84: Teilbereich
- 86: Anschlussseite
- 88: Stößelaufnahmeausnehmung
- 90: Außenumfang
- 92: Kernrohrrohling
- 94: Seitliche Begrenzung
- 96: Stufe
- 98: Stufe
- 100: Radius
- 102: Radius
- 104: Kernrohrrohling
- 106: Verfahrensschritt
- 108: Radialrichtung
- 110: Verfahrensschritt
- 112: Verfahrensschritt
- 114: Verjüngung
- 116: Randbereich
- 118: Mittlerer Bereich
- 120: Randbereich

## Patentansprüche

1. Verfahren zu einer Herstellung eines Kernrohrs (10a; 10b) für einen Magnetaktor (12a; 12b), welches zumindest entlang einer Längsrichtung (14a; 14b) des Kernrohrs (10a; 10b) eine, vorzugsweise druckdichte, magnetische Trennung aufweist, wobei in zumindest einem Verfahrensschritt (16'a; 16'b) ein, die magnetische Trennung des Kernrohrs (10a; 10b) erzeugendes Trennelement (18a; 18b), welches aus einem nichtmagnetischen Material (32a; 32b) ausgebildet ist, mittels eines Laser-Pulver-Auftragsschweißens stoffschlüssig in das Kernrohr (10a; 10b) eingefügt wird, und wobei in zumindest einem Vorbereitungsschritt (20a; 20b) ein Kernrohrrohling (92a; 92b, 104b) auf einem Außenumfang (22a; 22b) mit einer umlaufenden Nut (24a; 24b) versehen wird, in welche das Trennelement (18a; 18b) in dem Verfahrensschritt (16'a; 16'b) eingefügt wird, **dadurch gekennzeichnet, dass** in dem Verfahrensschritt (16'a; 16'b) das nichtmagnetische Material (32a; 32b) in Pulverform in einen Laserstrahl eingeblasen wird, in dem Laserstrahl aufgeschmolzen wird und anschließend in bereits aufgeschmolzener Form in die Nut (24a; 24b) eingebracht wird.

2. Verfahren nach Anspruch 1, **dadurch gekennzeichnet, dass** in dem Vorbereitungsschritt (20a; 20b) zumindest eine seitliche Begrenzung (26a; 26b) der Nut (24a; 24b) mit einer Magnetfeldleitkontur (28a; 28b) versehen wird, welche insbesondere eine Konusgeometrie des fertiggestellten Kernrohrs (10a; 10b) zu einer Beeinflussung einer Kraft-Weg-Kennlinie des das Kernrohr (10a; 10b) aufweisenden Magnetaktors (12a; 12b) ausbilden wird.

3. Verfahren nach Anspruch 1 oder 2, **dadurch gekennzeichnet, dass** das in dem Verfahrensschritt (16'a; 16'b) in den Laserstrahl eingeblasene und in dem Laserstrahl aufgeschmolzene pulverförmige nichtmagnetische Material (32a; 32b) als ein nichtmagnetisches Metallpulver ausgebildet ist.

4. Verfahren nach einem der vorhergehenden Ansprüche, **dadurch gekennzeichnet, dass** in zumindest einem weiteren Verfahrensschritt (30a; 30b) nach einem Einfügen des Trennelements (18a; 18b) in die Nut (24a; 24b) eine Ankeraufnahmeausnehmung (34a; 34b) in den Kernrohrrohling (92a; 92b) eingebracht wird, welche sich vorzugsweise in der Längsrichtung (14a; 14b) über die Nut (24a; 24b) hinaus erstreckt.

5. Verfahren nach Anspruch 4, **dadurch gekennzeichnet, dass** der Kernrohrrohling (92a) in dem weiteren Verfahrensschritt (30a) bei dem Einbringen der Ankeraufnahmeausnehmung (34a) bis zu einem Nutgrund (36a) der Nut (24a) ausgehöhlt wird.

6. Verfahren nach Anspruch 4, **dadurch gekennzeichnet, dass** der Kernrohrrohling (92b) in dem weiteren Verfahrensschritt (30b) bei dem Einbringen der Ankeraufnahmeausnehmung (34b) soweit ausgehöhlt wird, dass zwischen einem Nutgrund (36b) der Nut (24b) und einer Innenoberfläche (38b) der Ankeraufnahmeausnehmung (34b) lediglich ein dünner aus dem Material des Kernrohrrohlings (92b) bestehender Steg (40b), insbesondere mit einer Dicke (42b) von weniger als 0,5 mm und bevorzugt von weniger als 0,2 mm, übrigbleibt.

7. Verfahren nach Anspruch 6, **dadurch gekennzeichnet, dass** die Aushöhlung des Kernrohrrohlings (92b) bereits vor der Durchführung des Verfahrensschritts (16'b) mit dem Laser-Pulver-Auftragsschweißen vorgenommen wird.

8. Verfahren nach einem der Ansprüche 1 bis 3, **dadurch gekennzeichnet, dass** der Kernrohrohling (104b), in den in dem Vorbereitungsschritt (20b) die Nut (24b) eingebracht wird, als ein gezogenes Rohr ausgebildet ist, welches bereits eine Ankeraufnahmeausnehmung (34b) aufweist.

9. Verfahren nach einem der vorhergehenden Ansprüche, **dadurch gekennzeichnet, dass** in dem Verfahrensschritt (16'a; 16'b) das Trennelement (18a; 18b) so exakt in eine Nut (24a; 24b) des Kernrohrs (10a; 10b) eingefügt wird, dass eine Oberfläche (44a; 44b) des Trennelements (18a; 18b) und eine Oberfläche (46a; 46b) des Kernrohrs (10a; 10b) eben ineinander übergehen.

10. Verfahren nach einem der vorhergehenden Ansprüche, **dadurch gekennzeichnet, dass** in zumindest einem Verfahrensschritt (112a; 112b) nach einem abgeschlossenen Einbringen und zumindest teilweisen Aushärten des Trennelements (18a; 18b) der Laserstrahl oder ein weiterer Laserstrahl erneut über eine Oberfläche (44a; 44b) des Trennelements (18a; 18b) gefahren wird, um dadurch die Oberfläche (44a; 44b) des Trennelements (18a; 18b) durch erneutes, zumindest teilweises Aufschmelzen des Trennelements (18a; 18b) zu glätten und/oder zu egalisieren.

11. Magnetaktorvorrichtung (48a; 48b), mit zumindest einem Kernrohr (10a; 10b), welches entlang seiner Längsrichtung (14a; 14b) durch ein, insbesondere druckdichtes, Trennelement (18a; 18b) zumindest im Wesentlichen magnetisch getrennt ist, **dadurch gekennzeichnet, dass** das Trennelement (18a; 18b) mittels eines Laser-Pulver-Auftragsschweißens, bei dem ein nichtmagnetisches Material (32a; 32b) in Pulverform in einen Laserstrahl eingeblasen wird, in dem Laserstrahl aufgeschmolzen wird und anschließend in bereits aufgeschmolzener Form in eine auf einem Außenumfang (22a; 22b) eines Kernrohrrohlings (92a; 92b, 104b) umlaufende Nut (24a; 24b) eingebracht wird, stoffschlüssig in das Kernrohr (10a; 10b) eingefügt ist.

12. Magnetaktorvorrichtung (48a; 48b) nach Anspruch 11, **dadurch gekennzeichnet, dass** das Kernrohr (10a; 10b) an einer Grenzfläche (50a; 50b) zu dem Trennelement (18a; 18b) eine, insbesondere umlaufende, Magnetfeldleitkontur (28a; 28b) aufweist, welche insbesondere eine Konusgeometrie zu einer Beeinflussung einer Kraft-Weg-Kennlinie eines das Kernrohr (10a; 10b) aufweisenden Magnetaktors (12a; 12b) ausbildet.

13. Magnetaktorvorrichtung (48a; 48b) nach Anspruch 11 oder 12, **dadurch gekennzeichnet, dass** das Trennelement (18a; 18b) in einem Bereich einer Ankeraufnahmeausnehmung (34a; 34b) des Kernrohrs (10a; 10b) angeordnet ist.

14. Magnetaktorvorrichtung (48a) nach Anspruch 13, **dadurch gekennzeichnet, dass** das Trennelement (18a) sich von einem Außenumfang (22a) des Kernrohrs (10a) bis zu einem Innenumfang (52a) der Ankeraufnahmeausnehmung (34a) erstreckt.

15. Magnetaktorvorrichtung (48b) nach Anspruch 13, **dadurch gekennzeichnet, dass** das Trennelement (18b) sich von einem Außenumfang (22b) des Kernrohrs (10b) in Richtung der Ankeraufnahmeausnehmung (34b) erstreckt, wobei das Trennelement (18b) von der Ankeraufnahmeausnehmung (34b) durch einen dünnen, von dem Kernrohr (10b) gebildeten Steg (40b), insbesondere mit einer Dicke (42b) von weniger als 0,5 mm, vorzugsweise weniger als 0,2 mm, getrennt ist.

16. Magnetaktor (12a; 12b), insbesondere Magnetaktor (12a; 12b) für Hydraulikanwendungen, mit einer Magnetaktorvorrichtung (48a; 48b) nach einem der Ansprüche 11 bis 15.

## Claims

1. Method for producing a core tube (10a; 10b) for a magnetic actuator (12a; 12b) which has, at least along a longitudinal direction (14a; 14b) of the core tube (10a; 10b), a - preferably pressure-tight - magnetic separation, wherein in at least one method step (16'a; 16'b), a separating element (18a; 18b), which produces the magnetic separation of the core tube (10a; 10b) and is made of a non-magnetic material (32a; 32b), is inserted into the core tube (10a; 10b) by material bonding by means of laser-powder deposition welding,
and wherein, in at least one preparatory step (20a; 20b), a core tube blank (92a; 92b, 104b) is on its outer circumference (22a; 22b) provided with a circumferential groove (24a; 24b) into which the separating element (18a; 18b) is inserted in the method step (16'a; 16'b),
**characterized in that** in the method step (16'a; 16'b), the non-magnetic material (32a; 32b) is blown in powder form into a laser beam, is melted in the laser beam and then in already melted form is introduced into the groove (24a; 24b).

2. Method as claimed in claim 1,
**characterized in that** in the preparatory step (20a; 20b), at least one side boundary (26a; 26b) of the groove (24a; 24b) is provided with a magnetic field conduction contour (28a; 28b), which will in particular form a cone geometry of the completed core tube (10a; 10b) for influencing a force-travel curve of the magnetic actuator (12a; 12b) having the core tube (10a; 10b).

3. Method as claimed in claim 1 or 2,
**characterized in that** in the method step (16'a; 16'b), the powdery non-magnetic material (32a; 32b) blown into the laser beam and melted in the laser beam is realized as a non-magnetic metal powder.

4. Method as claimed in one of the preceding claims,
**characterized in that** in at least one further method step (30a; 30b), after insertion of the separating element (18a; 18b) into the groove (24a; 24b), an armature receiving recess (34a; 34b) is produced in the core tube blank (92a; 92b) and preferably extends beyond the groove (24a; 24b) in the longitudinal direction (14a; 14b).

5. Method as claimed in claim 4,
**characterized in that** in the further method step (30a), during the production of the armature receiving recess (34a), the core tube blank (92a) is hollowed out down to a groove bottom (36a) of the groove (24a).

6. Method as claimed in claim 4,
**characterized in that** in the further method step (30b), during the production of the armature receiving recess (34b), the core tube blank (92b) is hollowed out until only a thin web (40b) consisting of the material of the core tube blank (92b) remains between a groove bottom (36b) of the groove (24b) and an inner surface (38b) of the armature receiving recess (34b), in particular a web (40b) with a thickness (42b) of less than 0.5 mm and preferably less than 0.2 mm.

7. Method as claimed in claim 6,
**characterized in that** the hollowing-out of the core tube blank (92b) is executed already before performance of the method step (16'b) with the laser powder deposition welding.

8. Method as claimed in one of claims 1 to 3,
**characterized in that** the core tube blank (104b), in which the groove (24b) is produced during the preparatory step (20b), is embodied as a drawn tube which already has an armature receiving recess (34b).

9. Method as claimed in one of the preceding claims,
**characterized in that** in the method step (16'a; 16'b), the separating element (18a; 18b) is inserted into a groove (24a; 24b) of the core tube (10a; 10b) so precisely that a surface (44a; 44b) of the separating element (18a; 18b) and a surface (46a; 46b) of the core tube (10a; 10b) merge evenly into one another.

10. Method as claimed in one of the preceding claims,
**characterized in that** in at least one method step (112a; 112b), after completion of the insertion and at least partial hardening of the separating element (18a; 18b), the laser beam or a further laser beam is again passed over a surface (44a; 44b) of the separating element (18a; 18b) in order to thus smooth and/or equalize the surface (44a; 44b) of the separating element (18a; 18b) by further, at least partial melting of the separating element (18a; 18b).

11. Magnetic actuator device (48a; 48b),
with at least one core tube (10a; 10b), which is at least substantially magnetically separated along its longitudinal direction (14a; 14b) by an, in particular pressure-tight, separating element (18a; 18b), **characterized in that** by means of laser powder deposition welding, in which a non-magnetic material (32a; 32b) is blown in powder form into a laser beam, is melted in the laser beam and then in already melted form is introduced into a circumferential groove (24a; 24b) situated on an outer circumference (22a; 22b) of a core tube blank (92a; 92b, 104b), the separating element (18a; 18b) is inserted into the core tube (10a; 10b) by material bonding.

12. Magnetic actuator device (48a; 48b) as claimed in claim 11,
**characterized in that** the core tube (10a; 10b), at an interface (50a; 50b) to the separating element (18a; 18b), has an, in particular circumferential, magnetic field conduction contour (28a; 28b), which in particular forms a cone geometry for influencing a force-travel curve of a magnetic actuator (12a; 12b) having the core tube (10a; 10b).

13. Magnetic actuator device (48a; 48b) as claimed in claim 11 or 12,
**characterized in that** the separating element (18a; 18b) is arranged in a region of an armature receiving recess (34a; 34b) of the core tube (10a; 10b).

14. Magnetic actuator device (48a; 48b) as claimed in claim 13,
**characterized in that** the separating element (18a) extends from an outer circumference (22a) of the core tube (10a) to an inner circumference (52a) of the armature receiving recess (34a).

15. Magnetic actuator device (48a; 48b) as claimed in claim 13,
**characterized in that** the separating element (18b extends from an outer circumference (22b) of the core tube (10a) towards the armature receiving recess (34b), wherein the separating element (18b) is separated from the armature receiving recess (34b) by a thin web (40b) formed by the core tube (10b), in particular with a thickness (42b) of less than 0.5 mm, preferably less than 0.2 mm.

16. Magnetic actuator (12a; 12b), in particular a magnetic actuator (12a; 12b) for hydraulic applications, having a magnetic actuator device (48a; 48b) as claimed in one of claims 11 to 15.

## Revendications

1. Procédé pour produire un tube central (10a ; 10b) pour un actionneur magnétique (12a ; 12b), le tube central (10a ; 10b) ayant au moins le long d'une direction longitudinale (14a ; 14b) du tube central (10a ; 10b) une séparation magnétique, de préférence étanche à la pression,
où dans au moins une étape de procédé (16'a ; 16'b), un élément séparateur (18a ; 18b), qui génère la séparation magnétique du tube central (10a ; 10b) et est réalisé d'un matériau non magnétique (32a ; 32b), est inséré par liaison de matière dans le tube central (10a ; 10b) moyennant soudage par apport de poudre au laser, et où dans au moins une étape préparatoire (20a ; 20b), une ébauche de tube central (92a ; 92b, 104b) est pourvue sur une périphérie extérieure (22a ; 22b) d'une rainure circonférentielle (24a ; 24b) dans laquelle l'élément séparateur (18a ; 18b) est inséré dans l'étape de procédé (16'a ; 16'b), **caractérisé en ce que** dans l'étape de procédé (16'a ; 16'b), le matériau non magnétique (32a ; 32b) est insufflé sous forme de poudre dans un rayon laser, est fondu dans le rayon laser et est ensuite introduit sous forme déjà fondue dans la rainure (24a ; 24b).

2. Procédé selon la revendication 1,
**caractérisé en ce que** dans l'étape préparatoire (20a ; 20b), au moins une délimitation latérale (26a ; 26b) de la rainure (24a ; 24b) est pourvue d'un contour à conduction de champ magnétique (28a ; 28b) qui forme en particulier une géométrie conique du tube central (10a ; 10b) fini pour influencer une courbe caractéristique force-course de l'actionneur magnétique (12a ; 12b) comprenant le tube central (10a ; 10b).

3. Procédé selon la revendication 1 ou 2,
**caractérisé en ce que** le matériau non magnétique poudreux (32a ; 32b), insufflé dans le rayon laser et fondu dans le rayon laser dans l'étape de procédé (16'a ; 16'b), est réalisé comme poudre métallique non magnétique.

4. Procédé selon l'une des revendications précédentes,
**caractérisé en ce que** dans au moins une autre étape de procédé (30a ; 30b), après insertion de l'élément séparateur (18a ; 18b) dans la rainure (24a ; 24b), un évidement de logement d'armature (34a ; 34b) est introduit dans l'ébauche de tube central (92a ; 92b), ledit évidement s'étendant de préférence dans la direction longitudinale (14a ; 14b) au-delà de la rainure (24a ; 24b).

5. Procédé selon la revendication 4,
**caractérisé en ce que** dans l'autre étape de procédé (30a), lors de l'introduction de l'évidement de logement d'armature (34a), l'ébauche de tube central (92a) est creusée jusqu'à un fond de rainure (36a) de la rainure (24a).

6. Procédé selon la revendication 4,
**caractérisé en ce que** dans l'autre étape de procédé (30b), lors de l'introduction de l'évidement de logement d'armature (34b), l'ébauche de tube central (92b) est creusée jusqu'à ce qu'entre un fond de rainure (36b) de la rainure (24b) et une surface intérieure (38b) de l'évidement de logement d'armature (34b), il ne reste qu'une entretoise mince (40b) constituée du matériau de l'ébauche de tube central (92b), en particulier ayant une épaisseur (42b) inférieure à 0,5 mm et de préférence inférieure à 0,2 mm.

7. Procédé selon la revendication 6,
**caractérisé en ce que** le creusement de l'ébauche de tube central (92b) est déjà effectué avant l'exécution de l'étape de procédé (16'b) avec le soudage par apport de poudre au laser.

8. Procédé selon l'une des revendications 1 à 3,
**caractérisé en ce que** l'ébauche de tube central (104b), dans laquelle la rainure (24b) est introduite dans l'étape préparatoire (20b), est réalisée comme tube étiré qui comprend déjà un évidement de logement d'armature (34b).

9. Procédé selon l'une des revendications précédentes,
**caractérisé en ce que** dans l'étape de procédé (16'a ; 16'b), l'élément séparateur (18a ; 18b) est inséré dans une rainure (24a ; 24b) du tube central (10a ; 10b) avec une accuratesse telle qu'une surface (44a ; 44b) de l'élément séparateur (18a ; 18b) et une surface (46a ; 46b) du tube central (10a ; 10b) se fondent à plat l'une dans l'autre.

10. Procédé selon l'une des revendications précédentes,
**caractérisé en ce que** dans au moins une étape de procédé (112a ; 112b), quand une insertion et un durcissement au moins partiel de l'élément séparateur (18a ; 18b) ont été complétés, le rayon laser ou un autre rayon laser est à nouveau déplacé à travers une surface (44a ; 44b) de l'élément séparateur (18a ; 18b) afin de lisser et/ou égaliser ainsi la surface (44a ; 44b) de l'élément séparateur (18a ; 18b) par une nouvelle fusion au moins partielle de l'élément séparateur (18a ; 18b).

11. Dispositif d'actionneur magnétique (48a ; 48b), comprenant au moins un tube central (10a ; 10b) qui est au moins sensiblement séparé magnétiquement le long de sa direction longitudinale (14a ; 14b) par un élément séparateur (18a ; 18b), qui est en particulier étanche à la pression,
**caractérisé en ce que** moyennant soudage par apport de poudre au laser, dans lequel un matériau non magnétique (32a ; 32b) est insufflé sous forme de poudre dans un rayon laser, est fondue dans le rayon laser et est ensuite introduit sous forme déjà fondue dans une rainure circonférentielle (24a ; 24b) sur une périphérie extérieure (22a ; 22b) d'une ébauche de tube central (92a ; 92b, 104b), l'élément séparateur (18a ; 18b) est inséré dans le tube central (10a ; 10b) par liaison de matière.

12. Dispositif d'actionneur magnétique (48a ; 48b) selon la revendication 11, **caractérisé en ce que** le tube central (10a ; 10b) présente, à une interface (50a ; 50b) avec l'élément séparateur (18a ; 18b), un contour à conduction de champ magnétique (28a ; 28b), en particulier circonférentielle, qui forme en particulier une géométrie conique pour influencer une courbe caractéristique force-course d'un actionneur magnétique (12a ; 12b) comprenant le tube central (10a ; 10b).

13. Dispositif d'actionneur magnétique (48a ; 48b) selon la revendication 11 ou 12,
**caractérisé en ce que** l'élément séparateur (18a ; 18b) est disposé dans une zone d'un évidement de logement d'armature (34a ; 34b) du tube central (10a ; 10b).

14. Dispositif d'actionneur magnétique (48a) selon la revendication 13, **caractérisé en ce que** l'élément séparateur (18a) s'étend d'une périphérie extérieure (22a) du tube central (10a) jusqu'à une périphérie intérieure (52a) de l'évidement de logement d'armature (34a).

15. Dispositif d'actionneur magnétique (48b) selon la revendication 13, **caractérisé en ce que** l'élément séparateur (18b) s'étend d'une périphérie extérieure (22b) du tube central (10b) vers l'évidement de logement d'armature (34b), l'élément séparateur (18b) étant séparé de l'évidement de logement d'armature (34b) par une entretoise mince (40b) formée par le tube central (10b), en particulier avec une épaisseur (42b) inférieure à 0,5 mm, de préférence inférieure à 0,2 mm.

16. Actionneur magnétique (12a ; 12b), en particulier actionneur magnétique (12a ; 12b) pour applications hydrauliques, comprenant un dispositif d'actionneur magnétique (48a ; 48b) selon l'une des revendications 11 à 15.
